# EUROPEAN PATENT SPECIFICATION

(11) **EP 4 108 520 B1**
(45) Date of publication and mention of the grant of the patent: **30.07.2025**
(21) Application number: 21181199.7
(22) Date of filing: 23.06.2021
(51) Int. Cl.: B60N 2/42, B60N 2/16, B60N 2/427, B60N 2/07

(54) **SEAT RESTRAINT SYSTEM FOR USE IN A VEHICLE SEAT, A VEHICLE SEAT USING SUCH SEAT RESTRAINT SYSTEM, A RETRACTION ARRANGEMENT, AND A METHOD OF RESTRICTING UPWARD MOVEMENT OF A VEHICLE SEAT DURING A FRONTAL CRASH**
SITZRÜCKHALTESYSTEM ZUR VERWENDUNG IN EINEM FAHRZEUGSITZ, FAHRZEUGSITZ MIT EINEM SOLCHEN SITZRÜCKHALTESYSTEM, RÜCKZIEHVORRICHTUNG UND VERFAHREN ZUR BEGRENZUNG DER AUFWÄRTSBEWEGUNG EINES FAHRZEUGSITZES WÄHREND EINER FRONTALKOLLISION
SYSTÈME DE RETENUE DE SIÈGE POUR UNE UTILISATION DANS UN SIÈGE DE VÉHICULE, SIÈGE DE VÉHICULE UTILISANT UN TEL SYSTÈME DE RETENUE DE SIÈGE, AGENCEMENT DE RÉTRACTION ET PROCÉDÉ DE LIMITATION DU MOUVEMENT ASCENDANT D'UN SIÈGE DE VÉHICULE PENDANT UNE COLLISION FRONTALE

(43) Date of publication of application: 28.12.2022
(73) Proprietor: Autoliv Development AB, 44783 Vargarda (SE)
(72) Inventor: JANSSON, Anders, 447 83 Vårgårda (SE); VISHWANATHA, Abhiroop, 447 83 Vårgårda (SE)
(74) Representative: AWA Sweden AB

(56) References cited:
- US-A- 3 957 304
- US-B1- 6 322 140

## Description

### Technical field

The present invention relates to a seat restraint system for use in a vehicle seat, to a vehicle seat using such seat restraint system, and to a method of restricting upward movement of a vehicle seat during a frontal crash.

### Technical background

More or less all vehicle seats in motor vehicles are today provided with a seat belt. The seat belt is typically attached to the vehicle body with two connecting points to the floor and one connecting point to the B-pillar. Thereby the inherent rigidity of the vehicle body is used to absorb loads in the event of an accident or a sudden deceleration. This principle of connecting a safety belt is however less suitable in vehicles using human assisted driving (HAD) technology. The HAD technology allows especially the driver to shift focus towards e.g. different types of entertainment systems. This is already true for passengers in today's vehicles. There is hence a growing demand for more comfortable vehicle seats that allow larger adjustment ranges in terms of longitudinal and height adjustments but also in terms of reclining possibilities. This will however have a negative impact on the efficiency of seat belts which are supported by the vehicle body since the connecting points no longer necessarily will fit the position of the vehicle seat and the passenger to be belted. One solution is to instead attach the seat belt to the vehicle seat, often referred to as "belt-in-seat"-technology. US 3 957 304 A1 and US 6 322 140 B1 do each disclose an example of a seat restraint system. There is hence a need for improvements to seat restraint systems and especially seat restraint systems which are used for vehicle seats with integrated safety belts.

### Summary of the invention

It is an object of the present invention to overcome the above described drawbacks, and to provide an improved seat restraint system.

Another object is to provide a seat restraint system that is applicable to a vehicle seat no matter if it is a vehicle seat with an integrated seat belt or a vehicle seat to be used with a seat belt which is supported by the vehicle body.

Yet another object is to provide a retraction arrangement configured to be used in a seat restraint system for a vehicle seat.

These and other objects that will be apparent from the following summary and description are achieved by a seat restraint system according to the appended claims.

According to an aspect of the present invention, there is provided a seat restraint system for use in a vehicle seat, the system comprising:
a vehicle seat being adjustable in a height direction and in a longitudinal direction, said vehicle seat comprising a seat frame with a slider which slidingly engages a guiding rail which is configured to be fixedly supported by a vehicle body;
a retraction arrangement; and
a connector having a free length allowing the vehicle seat to be adjusted between minimum and maximum height positions and/or minimum and maximum longitudinal positions of the vehicle seat, and the connector having a first end connected to the retraction arrangement, and a second end connected to one of the seat frame, the guiding rail or the vehicle body; and
wherein the retraction arrangement is configured to, upon an activation signal, be activated to eliminate any slack of the connector.

Accordingly, a seat restraint system with the features according to claim 1 is provided.

The seat restraint system according to the invention uses a connector which in one end is connected to a retraction arrangement and which in another end is connected to one of the seat frame, the guiding rail or the vehicle body. Thereby a great freedom is allowed in terms of the position of the retraction arrangement. The retraction arrangement may in one embodiment be arranged in the guiding rail whereas one end of the connector is connected to the seat frame. In another embodiment, the retraction arrangement may instead be arranged on the seat frame whereas one end of the connector is connected to the guiding rail or directly to the vehicle body.

The retraction arrangement is configured to be activated, upon an activation signal such as from a crash sensor, to eliminate any slack of the connector. The activation signal may be communicated to the seat restraint system via a processor forming part of an Electronic Control Unit (ECU) of the vehicle as a response to a detected emergency situation, such as a frontal crash. The retraction arrangement will, when activated, pull the seat frame by means of the connector, and restrict the upward movement, mainly in the vertical direction, of the seat rear region by constraining the seat frame.

In its ordinary use, the connector will have a free length that allows the seat frame and hence the vehicle seat to be freely adjusted between the maximum and minimum height and longitudinal positions based on the occupant's needs. However, in the event of a frontal crash or a sudden deceleration, which deceleration is determined to fulfil predetermined requisitions for an activation, the retraction arrangement will be activated and substantially eliminate any slack.

It is preferred that one end of the connector is attached to one of the seat frame, the guiding rail or the vehicle body in an area corresponding to a lower rear end portion of the vehicle seat, i.e. an area in and around the junction between the seat portion and the back portion of the vehicle seat. By restricting the movement of the lower rear end portion of the vehicle seat in a substantially upward direction, also the movement of the back of the vehicle seat in a substantially forward direction, will be reduced. Consequently, also the movement of the upper end of the seat back near to the shoulder of an occupant from which point the seat belt exits, either from a belt guide or directly from a retractor, will be reduced.

More precisely, due to the general L-shaped design of the seating portion and the back portion, a displacement as measured in the junction between the seating portion and the back portion will be substantially smaller than a displacement as measured in a position at the shoulder portion. Even small displacements will cause enormous forces to the pelvis, the spine and not at least to the neck of a passenger. Further, the seat belt that runs across the chest of the passenger will cause a compression of the chest bone. By the present invention, it is made possible to reduce the displacement of the seat frame in the event of a frontal crash and especially restrict the upward movement hence also the resulting movement of the upper end of the back portion of the vehicle seat.

The retraction arrangement may in one embodiment be of the type which is disclosed in EP 2 253 518B1. The retraction arrangement may thus comprise a driver which is arranged in a cylinder chamber, said driver being displaceable in a retraction direction by a pressure which is applied to a first part of said cylinder chamber through an inlet. According to the invention, one end of the connector is connected to the driver whereas the other end of the connector is connected to a part of the seat frame, the vehicle body or the guiding rail. The driver may be a piston, but it may also, with remained function have any other shape that is displaceable received in a cylinder chamber.

The retraction arrangement may be directly or indirectly supported by the slider. The slider may in turn be configured to slidingly engage the guiding rail. Although the slider typically has a substantially horizontal direction, it is to be understood that the driver of the retraction arrangement may have a working direction that differs from the longitudinal extension of the slider.

The retraction arrangement may be mounted to the slider by means of e.g. bolting, riveting or welding. The retraction arrangement may be provided with any suitable brackets.

The retraction arrangement may be configured to extend along a longitudinally extending exterior wall portion of the guiding rail; or
the retraction arrangement may be configured to extend along a longitudinally extending inner wall portion of the guiding rail.

The position of the retraction arrangement is best decided by the specific vehicle seating. It may by way of example be preferred to arrange the retraction arrangement along the exterior wall portion of the guiding rail in the event the guiding is used to contain a power train for the seat adjustment. Correspondingly, it may be suitable to arrange the retraction arrangement along an inner wall portion of the guiding rail to prevent the arrangement from getting entangled with cable bundles and other features that may be arranged under the vehicle seat.

The retraction arrangement may comprise a driver, and the first end of the connector may be connected to the driver and the second end of the connector may be connected to a rear end portion of the seat frame.

The driver may be contained in a cylinder chamber which serves as a guide for the driver during actuation thereof. It is preferred that the driver has a substantially linear movement. By the driver being connected to one end of the connector and the other end of the connector being connected to a rear end portion of the seat frame, a displacement of the driver will cause a tensioning of the connector which eliminates any slack of the connector and hence restricts any pivoting of the rear end of the seat frame.

The retraction arrangement comprises a driver, and the first end of the connector is connected to the driver and the second end of the connector is connected to a reinforcing tube extending in the transverse direction between a respective rear end portion of two opposing longitudinally extending frame members of the seat frame.

The reinforcing tube may be an integral part of the seat frame and contributes to torsional stiffness of the seat frame. The connector may be connected to the reinforcing tube in a number of ways. Non restricting examples are by providing the connector with a loop that encircles the reinforcing tube or by using a bracket.

The retraction arrangement may, according to one embodiment, comprise a driver, and the retraction arrangement may be connected to the seat frame, and further, the first end of the connector may be connected to the driver, and the second end of the connector may connected to the vehicle body or to the guiding rail in an area adjacent a rear end portion of the seat frame.

In this alternative embodiment, the retraction arrangement is supported by the seat frame and the connector is connected to the vehicle body or to the guiding rail in an area adjacent a rear end portion of the seat frame. The guiding rail is typically fixedly mounted, either directly or indirectly, to the vehicle body. No matter position of the retraction arrangement, the same overall principle applies, i.e. a displacement of the driver will cause a tensioning of the connector which eliminates any slack of the connector and hence restricts any upward movement of the rear end of the seat frame.

The connector may be a wire, a belt or a chain. The connector may by way of example be made of metal or a composite material. The connector is preferably made of a rigid, non-elastic material. The connector may be encapsulated in a protective sleeve to thereby reduce noise. Although the connector preferably is made of a rigid, non-elastic material, the skilled person realizes that the high forces applied during a crash may cause a minor, inevitable elastic elongation of the connector.

The driver of the retraction arrangement may be configured to be actuated by a gas pressure generated by a gas generator. The gas generator may be a pyrotechnic gas generator.

According to another aspect of the invention, a vehicle seat is provided with at least one seat restraint system according to any of claims 1-5. The seat restraint system as such and its advantages have been thoroughly described above. Those arguments are equally applicable to a vehicle seat using such seat restraint system. Thus, in order of avoiding undue repetition, reference is made to the sections above.

The vehicle seat may be used in any type of motorized vehicle. In the event of only one seat restraint system being used, it is preferred that the seat restraint system is arranged on the side of the vehicle seat from where seat belt exits, either from a belt guide or directly from a retractor.

The vehicle seat may comprise two seat restraint systems which are arranged on two longitudinally opposing sides of the vehicle seat and in a rear end portion thereof. The two seat restraint systems are preferably symmetrically arranged.

The vehicle seat may further comprise a seat belt arrangement which is supported by the vehicle seat. Thereby, a greater freedom is provided to adjust the position of the vehicle seat without compromising on occupant safety.

According to yet another aspect, not forming part of the invention, a retraction arrangement configured to be used in a seat restraint system for a vehicle seat is provided. The retraction arrangement comprises: a driver contained in a cylinder chamber, and said driver being configured to be actuated by a gas pressure generated by a gas generator; a connector having a first end connected to the driver and a second end configured to be connected to one of a seat frame, a guiding rail of a vehicle seat or a vehicle body; and wherein the retraction arrangement is configured to, upon an activation signal, be activated to eliminate any slack of the connector.

The retraction arrangement as such and its advantages have been thoroughly described above in the context of its use in a seat restraint system and on a vehicle seat, respectively. Those arguments are equally applicable to a retraction arrangement as a stand-alone product. Thus, in order of avoiding undue repetition, reference is made to the sections above.

According to yet another aspect, method of restricting upward movement of a vehicle seat during a frontal crash is provided. The method comprises the features of claim of claim 9.

The operation and advantages of a seat restraint system comprising such connector and retraction arrangement have been thoroughly discussed above. Those arguments are equally applicable to a method of restricting upward movement of a vehicle seat during a frontal crash. Thus, in order of avoiding undue repetition, reference is made to the sections above.

### BRIEF DESCRIPTION OF THE DRAWINGS

The disclosure will be described in more detail with reference to the appended schematic drawings, which show an example of a presently preferred embodiment of the disclosure.
Fig. 1a shows a schematic side view of a lower portion of a vehicle seat with a seat restraint system according to the invention in a position when the vehicle seat is set to its highest position.
Fig. 1b discloses the seat restraint system according to Fig. 1a in a condition when the vehicle seat is set to its lowest position.
Fig. 2a discloses a schematic cross section of the retraction arrangement in its first, non-activated position.
Fig. 2b discloses a schematic cross section of the retraction arrangement in its second, activated position.
Fig. 2c discloses a schematic cross section of the retraction arrangement in its activated, locked position.
Figs. 3a-3c disclose different positions of the retraction arrangement in view of the slider and guiding rail.
Fig. 4 discloses, highly schematically a vehicle seat with a seat restraint system according to the invention.
Figs. 5a-5c discloses highly schematically the operation of the retraction system.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein. Rather, these embodiments are provided for thoroughness and completeness, and to fully convey the scope of the disclosure to the skilled addressee. Like reference characters refer to like elements throughout.

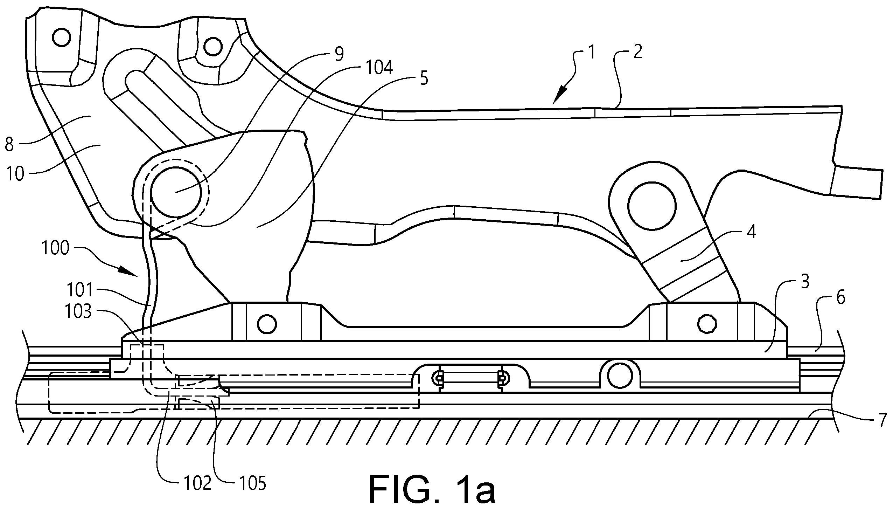

Now turning to Fig. 1a, a schematic side view of a lower portion of a vehicle seat 1 with a seat restraint system 100 according to the invention is disclosed. To facilitate the understanding of the invention, the vehicle seat 1 is disclosed highly schematically. The vehicle seat 1, which as such is well known in the art, comprises a seat frame 2. The vehicle seat 1 is adjustable in the height direction and in the longitudinal direction. To allow the adjustment, the seat frame 2 is connected to a slider 3, typically in the form of a sliding rail, via a front link arm 4 and a rear link arm 5. The slider 3 is in turn slidingly received in a guiding rail 6. The guiding rail 6 is typically directly, or indirectly connected to the floor of the vehicle body 7.

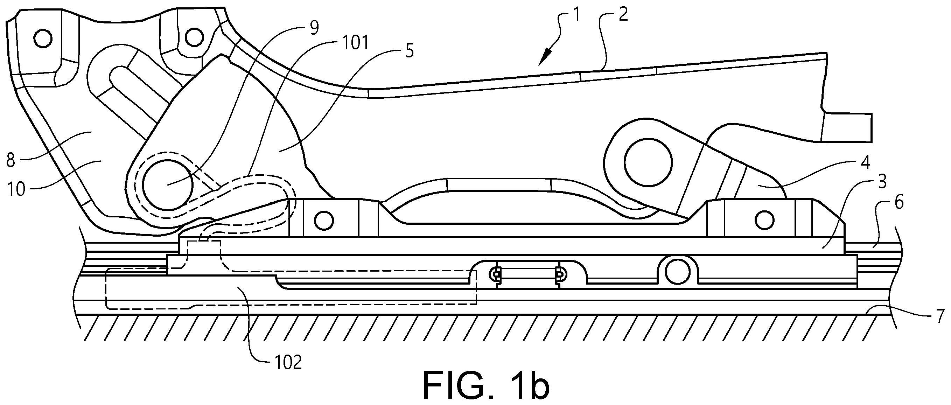

The vehicle seat 1 is adjustable in the longitudinal direction between a rear end position and a front end position by the slider 3 being slidingly received in the guiding rail 6. Further, the vehicle seat 1 is adjustable in the height direction between an upper most elevated position as shown in Fig 1a and a lower most position as shown in Fig. 1b. The height adjustment is allowed by each of the front link arm 4 and the rear link arm 5 being hingedly connected to the seat frame 2 and to the slider 3 respectively.

The vehicle seat 1 is provided with a seat restraint system 100 according to the invention. The seat restraint system 100 comprises a connector 101 and a retraction arrangement 102, each of them to be discussed below.

Starting with the connector 101. The connector 101 may be a wire, a belt or a chain. The connector 101 is preferably made of a rigid material such as metal or a composite material. It is to be understood that although the material as such is considered as being rigid, the high forces applied during an activation of the restriction arrangement 102 may cause a minor, inevitable elastic elongation of the connector 101. It is however preferred that any elongation should be as small as possible. The connector 101 may be encapsulated in a protective sleeve to thereby reduce noise.

A first end 103 of the connector 101 is connected to a driver 105, to be discussed below. The driver 105 forms part of the retraction arrangement 102. This connection forms a first connection point.

A second end 104 of the connector 101 is disclosed as being connected to a rear end portion 8 of the seat frame 2. This connection forms a second connection point. More precisely, the second end 104 of the connector 101 is disclosed as being connected to a reinforcing tube 9 that extends in the transverse direction between a respective rear end portion of two opposing longitudinally extending frame members 10 of the seat frame 2. To facilitate understanding, only one frame member 10 is disclosed. The reinforcing tube 9 may be an integral part of the seat frame 2 and contributes to torsional stiffness of the seat frame 2. Such reinforcing tube 9 is well known in the art and is used in basically all known vehicle seats 1.

The connector 101 is disclosed as being connected to the reinforcing tube 9 by means of a loop that encircles the reinforcing tube 9. The connector 101 may be connected to the reinforcing tube 9 in a number of ways with remained function.

The connector 101 has a free length, i.e. as measured between the first and second connection points, which has a slack which allows the vehicle seat 1 to be adjusted between the minimum and maximum height positions and/or the minimum and maximum longitudinal positions of the vehicle seat 1. It is preferred that the connector 101 is overlong, i.e. somewhat longer than required to reach the respective ends position.

The connector 101 is in Fig. 1b illustrated as forming an arc which extends in a forward direction towards a position under the vehicle seat 1 in a position when the vehicle seat 1 is in its lowest rear position and thus when the slack of the connector 101 is the largest. Thereby the connector 101 will be hidden under the vehicle seat 1 and the risk of the connector 101 being entangled with the feet of a passenger sitting behind that vehicle seat 1 is reduced. It is to be understood that the connector 101 with remained function may be directed in the opposite direction.

The retraction arrangement 102 is configured to, upon an activation signal, be activated to eliminate any slack of the connector. This will be further discussed below.

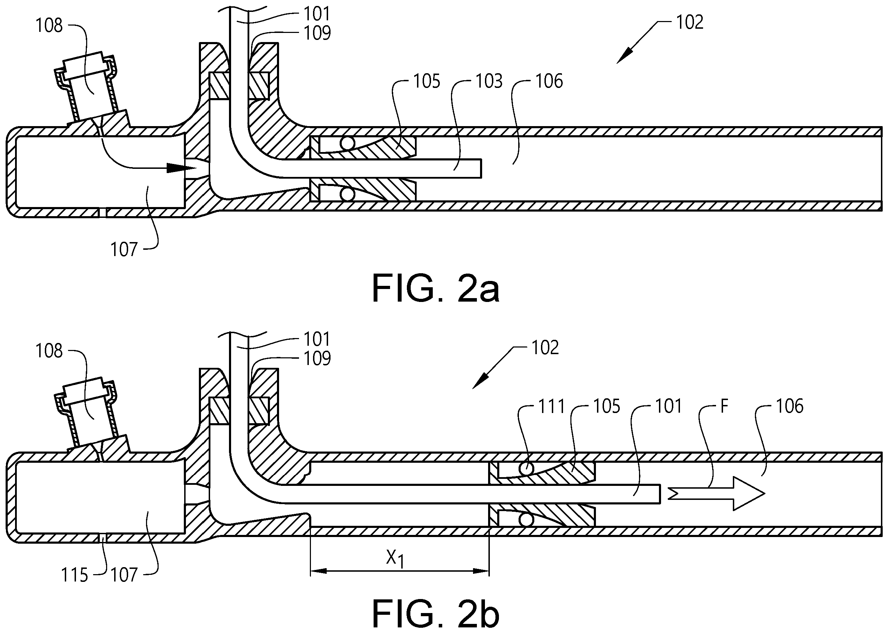

Before going into the details of the invention and how the slack is eliminated, the overall design of the retraction arrangement 102 will be disclosed with reference to Figs. 2a-2c. The retraction arrangement 102 is disclosed highly schematically.

Starting with Fig. 2a, the retraction arrangement 102 comprises a driver 105 which is contained in a cylindrical chamber 106 which serves as a guide for the driver 105 during actuation thereof. It is preferred that the driver 105 has a substantially linear movement inside the cylindrical chamber 106.

The cylindrical chamber 106 is arranged in communication with a gas chamber 107 which in turn is connected to a gas generator 108. The driver 105 is configured to be actuated by a gas pressure which is generated by the gas generator 108. The gas generator 108 may by way of example be a pyrotechnic gas generator. The driver 105 is in Fig. 2a disclosed in its first position which is the default, non-activated position of the retraction arrangement 102. The driver 105 connects with the first end 103 of the connector 101 which end extends into the cylindrical chamber 106 via an opening 109 in a side wall portion thereof.

The driver 105 is configured, upon activation of the retraction arrangement 102, to be longitudinally displaced to a second position, see Fig. 2b, inside the cylindrical chamber 106. During this displacement, illustrated as X1, the driver 105 will pull the connector 101 to thereby tension the same. Thus, the displacement of the driver 105 will cause a tensioning of the connector 101 which eliminates any slack of the connector 101. The effect of the eliminated slack will be that the rear end portion 8 of the seat frame 2 and hence the rear end of the vehicle seat 1 will be pulled downwardly. This will be further discussed below.

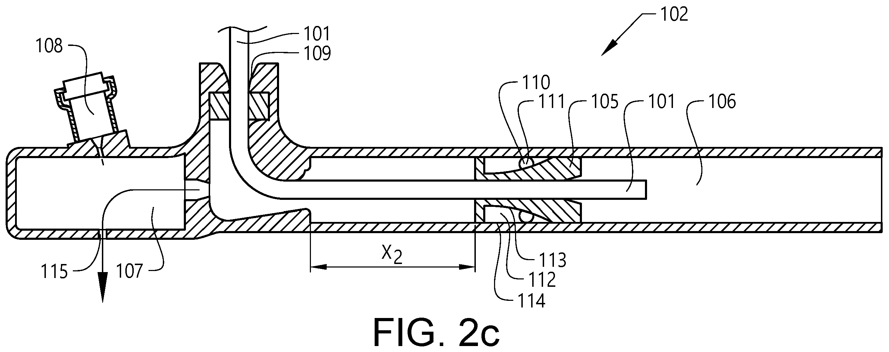

Now turning to Fig. 2c, the driver 105 may be configured to be locked in the second position to thereby maintain the tension of the connector 101 also after an activation of the retraction arrangement 102. The locking is provided for by a locking arrangement 110. The locking arrangement 110 is in the disclosed embodiment provided by the driver 105 interacting with a plurality of balls 111 which are received in a compartment 112 which is defined by a wedge-shaped envelope surface 113 of the driver 105 and an inner wall 114 of the cylindrical chamber 106.

Now turning to Fig. 2a anew. When activating the retraction arrangement 102, the gas generator 108 is activated to thereby generate a flow of pressurized gas, see arrow, which enters the gas chamber 107. The pressure displaces the driver 105 in the longitudinal direction, see distance X1 in Fig. 2b, whereby the connector 101 is tensioned. During this displacement, the balls 111 will move along. After activation, the gas will be vented from the gas chamber 107 via a vent hole 115. As the gas pressure in the gas chamber 107 is relieved, the driver 105 may in some circumstances be forced to be moved in the opposite direction. Any such movement would cause a new unwanted slack of the connector 101. To reduce this, the balls 111 will during such opposite movement of the driver 105, see Fig. 2c, wedgingly engage the wedge-shaped envelope surface 113 of the driver 105 and the inner wall 114 of the cylindrical chamber 106. This wedging will prevent the driver 105 from being further moved towards its original first position and thereby also maintain a tension of the connector 101 also after an accident where the retraction arrangement 102 has been activated. The displacement of the driver 105 in its locked position in view of the driver's first position is illustrated as X2 in Fig. 2c. The displacement X2 is smaller than the displacement X1.

The retraction arrangement 102 comprises a bracket (not disclosed in Figs. 2a-2c) that is configured to allow the retraction arrangement 102 to be mounted to the seat frame 2 or to any other support. The mounting may be made e.g. by bolting or welding. The skilled person realizes that the design and position of such bracket depends on the specific vehicle seat 1 or vehicle body to which the retraction arrangement 102 is intended to be mounted. Each manufacturer of a vehicle seat/vehicle body has their own unique design.

The retraction arrangement 102 may be arranged in different positions in view of the seat frame 2. In the following examples of different positions will be given.

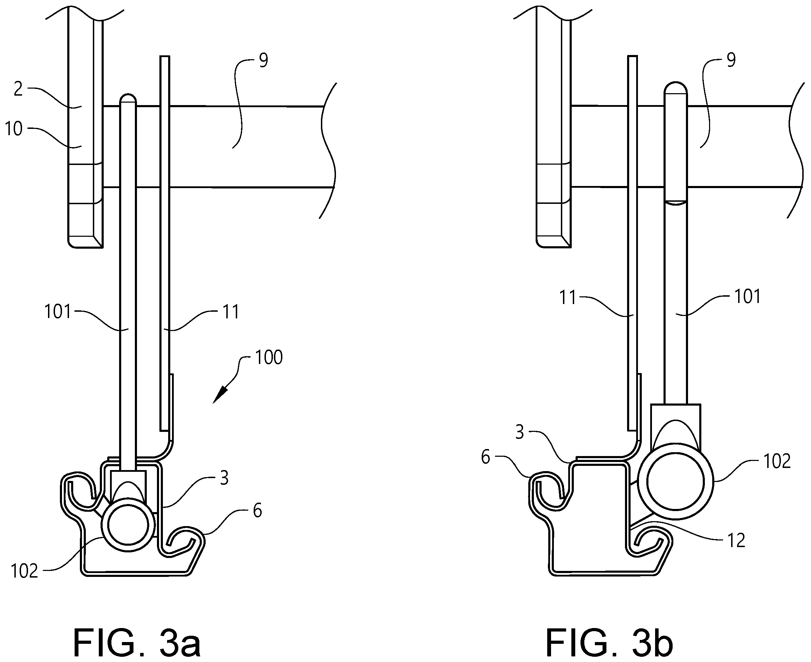

Starting with Fig. 3a, a cross section of the seat restraint system 100 is disclosed. The retraction arrangement 102 is being disclosed as being arranged inside the slider 3 which in turn is configured to be slidingly received in the guiding rail 6. The retraction arrangement 102 may be mounted to the slider 3 by means of e.g. bolting, riveting or welding. The retraction arrangement 102 may be provided with any suitable brackets to facilitate mounting. The slider 3 is in turn connected to the seat frame 2 via a bracket 11. This mounting may be made by e.g. bolting or welding. In this arrangement, it is preferred that the connector 101 is connected to the reinforcing tube 9 along a portion thereof that extends between an outer frame member 10 of the seat frame 2 and the bracket 11 to which the slider 3 is mounted. Thus, the connector 101 is arranged substantially in the same vertical plane as the slider 3.

Turning to Fig. 3b, an alternative position of the retraction arrangement 102 is disclosed. The retraction arrangement 102 is disclosed as being arranged along a longitudinally extending exterior wall portion 12 of the slider 3. The slider 3 is in turn connected to the seat frame 2 via a bracket 11. In this arrangement, it is preferred that the connector 101 is connected to the reinforcing tube 9 along a portion thereof that extends between the two brackets 11 (only one disclosed) that are typically used to support the sliders 3 of the vehicle seat 1. The slider 3 is disclosed as being arranged inside the guiding rail 6.

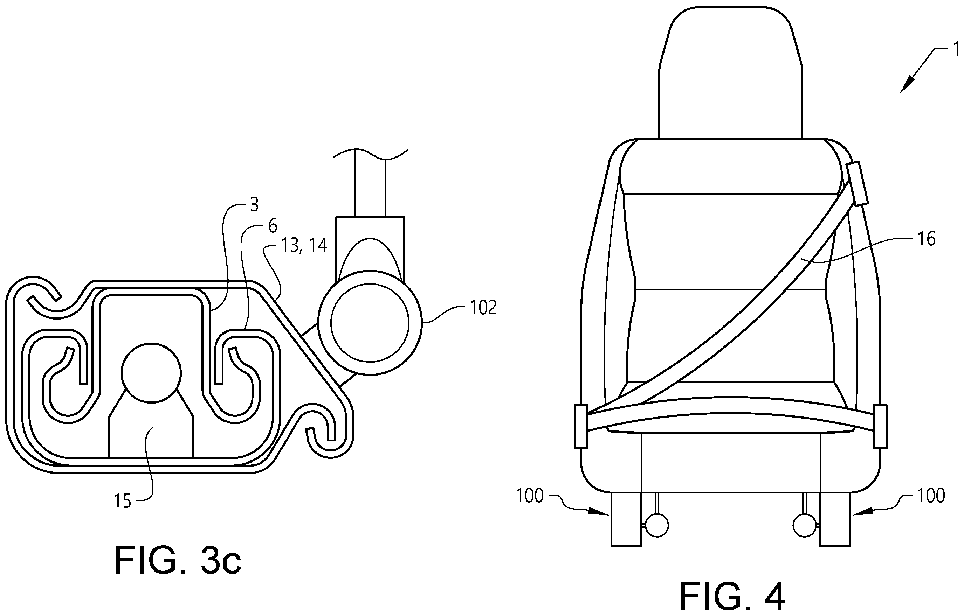

Now turning to Fig. 3c, yet another alternative position of the retraction arrangement 102 is disclosed. The slider 3 is slidingly receive in the guiding rail 6. Also, a power train 15 for the seat adjustment is disclosed as being arranged in the cavity that is defined between the slider 3 and the guiding rail 6. The retraction arrangement 102 is in this embodiment disclosed as being arranged along a longitudinally extending exterior wall portion 13 of an outer flange 14 which is fixedly arranged, e.g. by welding, to the slider 3. The slider 3 may in turn directly or indirectly be connected to the seat frame 2 via a suitable bracket (not disclosed). The slider3 is disclosed as being arranged inside the guiding rail 6.

Accordingly, the retraction arrangement 102 may be arranged in numerous positions with remained function. The skilled person realizes that the slider must not always be arranged in the guiding rail but may in some embodiments be arranged on an exterior surface of the guiding rail. The retraction arrangement may even be arranged in other positions than on the slider/guiding rail, such as on the floor of the vehicle body. The position of the retraction arrangement is thus best decided by the specific vehicle seating/vehicle body. It may by way of example be preferred to arrange the retraction arrangement along the exterior wall portion of the guiding rail or the slider in the event any of them are used to contain a power train for the seat adjustment. Correspondingly, it may be suitable to arrange the retraction arrangement along an inner wall portion of any of the guiding rail or the slider to prevent the arrangement from getting entangled with cable bundles and other features that may be arranged under the vehicle seat.

Now turning to Fig. 4, a highly schematically disclosed vehicle seat 1 is disclosed, which is provided with two seat restraint systems 100 of the type described above. In the event only one seat restraint system 100 is used, it is preferred that the seat restraint system 100 is arranged on the side of the vehicle seat 1 from where seat belt exits, either from a belt guide or directly from a retractor. The vehicle seat 1 may be used in any type of motorized vehicle.

The two seat restraint systems 100 are arranged on two longitudinally opposing sides of the vehicle seat 1 and in a rear end portion thereof. The seat restraint system(s) 100 should preferably be arranged substantially below the back portion of the vehicle seat.

The seat restraint systems 100 are preferably symmetrically arranged. The vehicle seat is disclosed as being provided with a seat belt arrangement 16 which is supported by the vehicle seat. This technology is often referred to as "belt-in-seat". The invention is however equally applicable in the event the seat belt arrangement 16 instead should be supported by the vehicle body.

In the following the operation of the seat restraint system will be discussed.

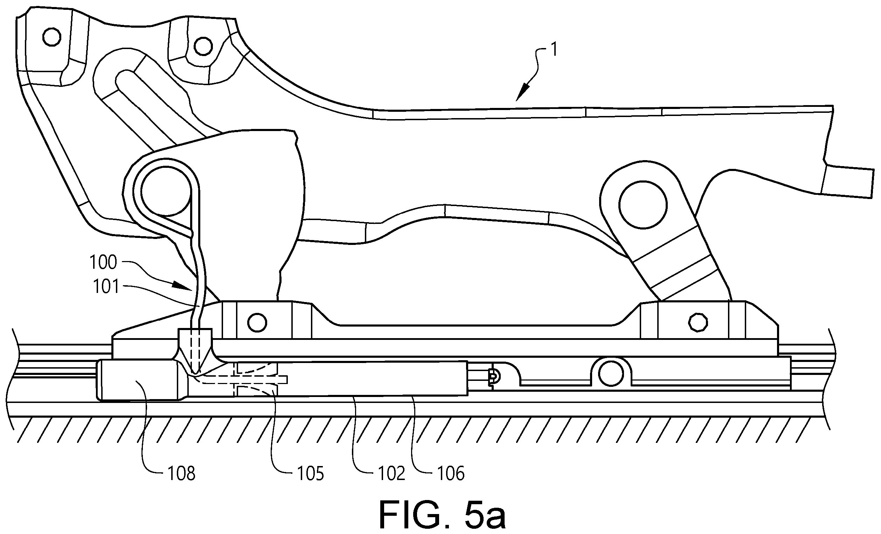

Starting with Fig.5a, the vehicle seat 1 is disclosed as being adjusted to its highest position. In its ordinary use, no matter position of the vehicle seat 1, the connector 101 has a slack that allows the vehicle seat 1 to be freely adjusted between its minimum and maximum positions no matter if it is in the height direction or in the longitudinal direction.

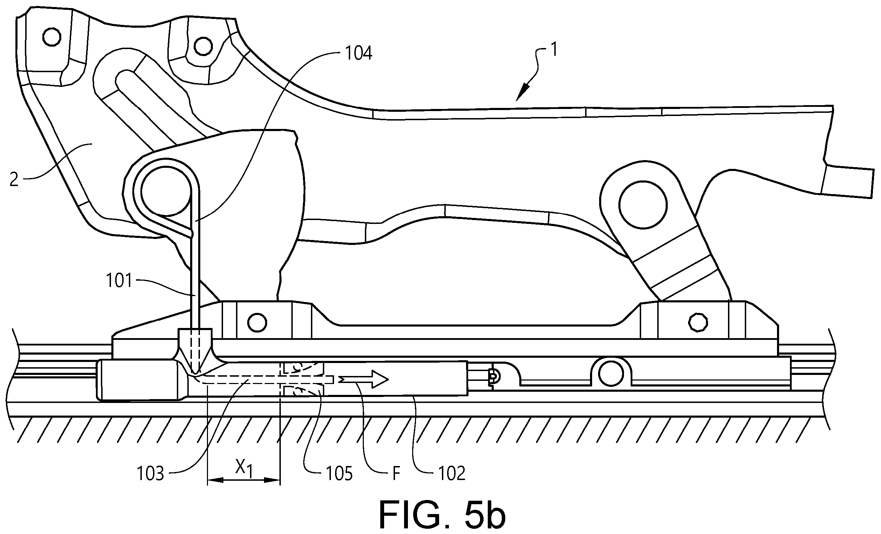

In the event the Electronic Control Unit (ECU) of the vehicle via an integrated processor thereof should determine that there is an emergency situation to be responded to, such as a frontal crash, an activation signal is communicated to the seat restraint system 100, which activates the same. In response to such activation signal, the retraction arrangement 102 is activated. Upon activation, the gas generator 108 of the retraction arrangement 102 is activated, whereby a volume of pressurized gas is developed which in turn causes the driver 105 to be moved from its first position, see Fig. 5a, to its second position, see Fig. 5b. This displacement is disclosed in Fig. 5b as X1. Since the first end 103 of the connector 101 is connected to the driver 105, the displacement of the driver 105 will pull the connector 101 along and thereby eliminate any slack of the connector 101. Since the second end 104 of the connector 101 is directly or indirectly connected to the seat frame 2, the retraction arrangement 102 will accordingly, when activated, pull the seat frame 2 downwardly by means of the connector 101, and thereby restrict the upward movement of the seat rear region which movement is typically the result of a frontal crash.

It is preferred that the first end 103 of the connector 101 is attached to one of the seat frame 3, the guiding rail 6 or even the vehicle body 7 in an area which corresponds, to a lower rear end portion of the vehicle seat 1, i.e. an area in and around the junction between the seat portion and the back portion of the vehicle seat. By restricting the movement of the lower rear end of the vehicle seat, also the movement of the back of the vehicle seat will be reduced and consequently also the movement of the upper end of the seat back near to the shoulder of an occupant from which point the seat belt exits either from a belt guide or directly from a retractor.

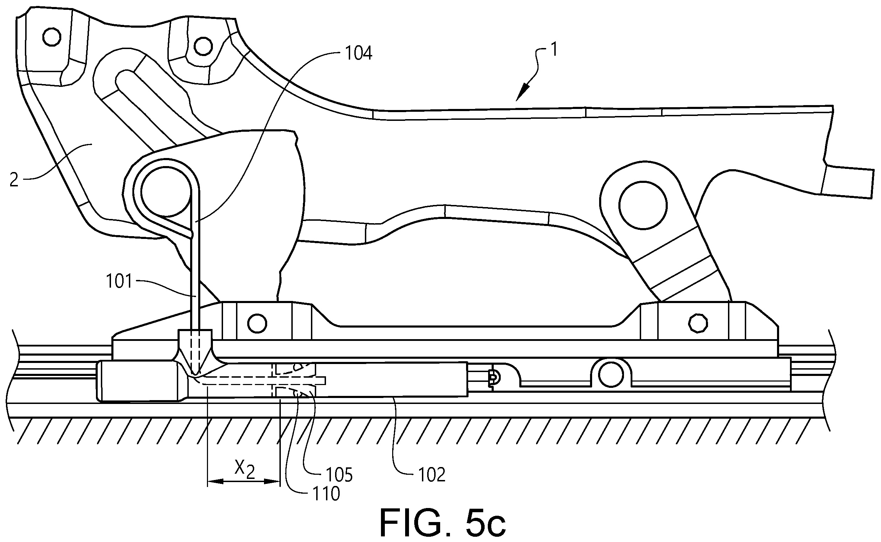

Now turning to Fig. 5c. As the gas is vented from the gas chamber, the driver 105 will retract somewhat, into a locked position in which the locking arrangement 110 substantially maintains a tensioning of the connector 101 also after the crash. This displacement is disclosed in Fig. 5c as X2 where the distance X2 is smaller than X1.

The skilled person realises that a number of modifications of the embodiments described herein are possible without departing from the scope of the disclosure, which is defined in the appended claims.

The guiding rail is typically fixedly mounted, either directly or indirectly, to the vehicle body. No matter position of the retraction arrangement, the same overall principle applies, i.e. a displacement of the driver will cause a tensioning of the connector which eliminates any slack of the connector and hence restricts any upward movement of the rear end of the seat frame.

The restriction arrangement with the driver has been illustrated as having a substantially horizontal working direction. It is to be understood that the driver with remained function may have a different working direction. By providing a mainly horizontal movement, a space is used that is typically available in all types of vehicle seats.

The cylindrical chamber of the restriction arrangement has been disclosed as having a circular cross section. If a circular tube is difficult to package and fasten to the rails, a square or rectangular or any other shaped tube may be used.

The seat restraint system may be combined with a non-disclosed, separate restraint system that is configured to reduce the movement of the front end of the vehicle seat in the event of a frontal crash. The two systems may be configured to be activated simultaneously.

## Claims

1. A seat restraint system (100) for use in a vehicle seat, the system comprising
a vehicle seat (1) being adjustable in a height direction and in a longitudinal direction, said vehicle seat (1) comprising a seat frame (2) with a slider (3) which slidingly engages a guiding rail (6) which is configured to be fixedly supported by a vehicle body (7); and wherein the system further comprises
a retraction arrangement (102) configured to extend along a longitudinally extending inner or exterior wall portion of the guiding rail (6); and
a connector (101) having a free length allowing the vehicle seat (1) to be adjusted between minimum and maximum height positions and/or minimum and maximum longitudinal positions of the vehicle seat (1), and the connector (101) having a first end (103) connected to a driver of the retraction arrangement (102), and a second end (104) connected to a reinforcing tube (9) extending in the transverse direction between a respective rear end portion of two opposing longitudinally extending frame members (10) of the seat frame (2); and
wherein the retraction arrangement (102) is configured to, upon an activation signal, be activated to eliminate any slack of the connector (101).

2. The seat restraint system according to claim 1, wherein the retraction arrangement (102) is directly or indirectly supported by the slider (3).

3. The seat restraint system according to any of the preceding claims, wherein the connector (101) is a wire, a belt or a chain.

4. The seat restraint system according to any of claims 1-3, wherein
the driver (105) of the retraction arrangement (101) is configured to be actuated by a gas pressure generated by a gas generator (108).

5. A vehicle seat provided with at least one seat restraint system (100) according to any of claims 1-4.

6. The vehicle seat according to claim 5, comprising two seat restraint systems (100) being arranged on two longitudinally opposing sides of the vehicle seat (1) and in a rear end portion thereof.

7. A vehicle seat according to claim 5 or 6, further comprising a seat belt arrangement (16) supported by the vehicle seat (1).

8. A method of restricting upward movement of a vehicle seat (1) during a frontal crash, the method comprising the acts of:
arranging a connector (101) having a free length allowing the vehicle seat (1) to be adjusted between minimum and maximum height positions and/or minimum and maximum longitudinal positions of the vehicle seat (1), said connector (101) having a first end (103) connected at a first connection point to a driver of the retraction arrangement (102), and a second end (104) connected at a second connection point to a reinforcing tube (9) extending in the transverse direction between a respective rear end portion of two opposing longitudinally extending frame members (10);
fixedly arranging the retraction arrangement (102) so that it extends along a longitudinally extending wall portion of the guiding rail (6; and
activating, upon an activation signal, the retraction arrangement (102) to eliminate any slack of the connector (101).

## Patentansprüche

1. Sitzrückhaltesystem (100) zur Verwendung in einem Fahrzeugsitz, das System umfassend
einen Fahrzeugsitz (1), der in einer Höhenrichtung und in einer Längsrichtung einstellbar ist, der Fahrzeugsitz (1) umfassend einen Sitzrahmen (2) mit einem Gleiter (3), der mit einer Führungsschiene (6) gleitend in Eingriff steht, die konfiguriert ist, um durch einen Fahrzeugkörper (7) fest getragen zu werden; und wobei das System ferner umfasst
eine Rückzugsanordnung (102), die konfiguriert ist, um sich entlang eines sich in Längsrichtung erstreckenden inneren oder äußeren Wandabschnitts der Führungsschiene (6) zu erstrecken; und
einen Verbinder (101), der eine freie Länge aufweist, die ermöglicht, dass der Fahrzeugsitz (1) zwischen minimalen und maximalen Höhenpositionen und/oder minimalen und maximalen Längspositionen des Fahrzeugsitzes (1) eingestellt wird, und wobei der Verbinder (101) ein erstes Ende (103), das mit einem Antrieb der Rückzugsanordnung (102) verbunden ist, und ein zweites Ende (104) aufweist, das mit einem Verstärkungsrohr (9) verbunden ist, das sich in der Querrichtung zwischen einem jeweiligen hinteren Endabschnitt von zwei gegenüberliegenden, sich in Längsrichtung erstreckenden Rahmenelementen (10) des Sitzrahmens (2) erstreckt; und
wobei die Rückzugsanordnung (102) konfiguriert ist, um bei einem Aktivierungssignal aktiviert zu werden, um jeglichen Durchhang des Verbinders (101) zu beseitigen.

2. Sitzrückhaltesystem nach Anspruch 1, wobei die Rückzugsanordnung (102) direkt oder indirekt durch den Gleiter (3) getragen wird.

3. Sitzrückhaltesystem nach einem der vorstehenden Ansprüche, wobei das Verbindungselement (101) ein Draht, ein Gurt oder eine Kette ist.

4. Sitzrückhaltesystem nach einem der Ansprüche 1 bis 3, wobei der Antrieb (105) der Rückzugsanordnung (101) konfiguriert ist, um durch einen Gasdruck, der durch einen Gasgenerator (108) erzeugt wird, betätigt zu werden.

5. Fahrzeugsitz, der mit mindestens einem Sitzrückhaltesystem (100) nach einem der Ansprüche 1 bis 4 versehen ist.

6. Fahrzeugsitz nach Anspruch 5, umfassend zwei Sitzrückhaltesysteme (100), die an zwei in Längsrichtung gegenüberliegenden Seiten des Fahrzeugsitzes (1) und in einem hinteren Endabschnitt davon angeordnet sind.

7. Fahrzeugsitz nach Anspruch 5 oder 6, ferner umfassend eine Sicherheitsgurtanordnung (16), die durch den Fahrzeugsitz (1) getragen wird.

8. Verfahren zum Beschränken einer Aufwärtsbewegung eines Fahrzeugsitzes (1) während eines Frontalaufpralls, das Verfahren umfassend die Vorgänge:
Anordnen eines Verbinders (101), der eine freie Länge aufweist, die ermöglicht, dass der Fahrzeugsitz (1) zwischen minimalen und maximalen Höhenpositionen und/oder minimalen und maximalen Längspositionen des Fahrzeugsitzes (1) eingestellt wird, wobei der Verbinder (101) ein erstes Ende (103), das an einem ersten Verbindungspunkt mit einem Antrieb der Rückzugsanordnung (102) verbunden ist, und ein zweites Ende (104) aufweist, das an einem zweiten Verbindungspunkt mit einem Verstärkungsrohr (9) verbunden ist, das sich in der Querrichtung zwischen einem jeweiligen hinteren Endabschnitt von zwei gegenüberliegenden, sich in Längsrichtung erstreckenden Rahmenelementen (10) erstreckt;
Festes Anordnen der Rückzugsanordnung (102), sodass sie sich entlang eines sich in Längsrichtung erstreckenden Wandabschnitts der Führungsschiene (6 erstreckt; und
Aktivieren, bei einem Aktivierungssignal, der Rückzugsanordnung (102), um jeglichen Durchhang des Verbinders (101) zu beseitigen.

## Revendications

1. Système de retenue de siège (100) destiné à être utilisé dans un siège de véhicule, le système comprenant
un siège de véhicule (1) étant réglable en hauteur et en longueur, ledit siège de véhicule (1) comprenant un cadre de siège (2) avec une glissière (3) qui vient en prise de manière coulissante avec un rail de guidage (6) conçu pour être supporté de manière fixe par une carrosserie de véhicule (7) ; et dans lequel le système comprend en outre
un dispositif de rétraction (102) conçu pour s'étendre le long d'une partie de la paroi intérieure ou extérieure du rail de guidage (6) qui s'étend longitudinalement ; et
un raccord (101) ayant une longueur libre permettant au siège du véhicule (1) d'être réglé entre les positions de hauteur minimale et maximale et/ou les positions longitudinales minimale et maximale du siège du véhicule (1), et le raccord (101) ayant une première extrémité (103) reliée à un conducteur du dispositif de rétraction (102), et une seconde extrémité (104) reliée à un tube de renforcement (9) s'étendant dans la direction transversale entre une partie d'extrémité arrière respective de deux éléments de cadre opposés s'étendant longitudinalement (10) du cadre du siège (2) ; et
dans lequel le dispositif de rétraction (102) est conçu pour, sur signal d'activation, être activé afin d'éliminer quelconque jeu du raccord (101).

2. Système de retenue de siège selon la revendication 1, dans lequel le dispositif de rétraction (102) est directement ou indirectement supporté par la glissière (3).

3. Système de retenue de siège selon l'une quelconque des revendications précédentes, dans lequel le raccord (101) est un fil, une ceinture ou une chaîne.

4. Système de retenue de siège selon l'une quelconque des revendications 1 à 3, dans lequel l'entraîneur (105) du dispositif de rétraction (101) est conçu pour être actionné par une pression de gaz générée par un générateur de gaz (108).

5. Siège de véhicule doté d'au moins un système de retenue (100) selon l'une quelconque des revendications 1 à 4.

6. Siège de véhicule selon la revendication 5, comprenant deux systèmes de retenue de siège (100) étant disposés sur deux côtés longitudinalement opposés du siège de véhicule (1) et dans une partie arrière de celui-ci.

7. Siège de véhicule selon la revendication 5 ou 6, comprenant en outre un dispositif de ceinture de sécurité (16) supporté par le siège de véhicule (1).

8. Procédé destiné à limiter le déplacement vers le haut d'un siège de véhicule (1) lors d'une collision frontale, le procédé comprenant les actions consistant à :
disposer un raccord (101) ayant une longueur libre permettant au siège de véhicule (1) d'être réglé entre des positions de hauteur minimale et maximale et/ou des positions longitudinales minimale et maximale du siège du véhicule (1), ledit raccord (101) ayant une première extrémité (103) reliée à un premier point de liaison à un conducteur du dispositif de rétraction (102), et une seconde extrémité (104) reliée à un second point de liaison à un tube de renforcement (9) s'étendant dans la direction transversale entre une partie d'extrémité arrière respective de deux éléments de cadre opposés s'étendant longitudinalement (10) ;
disposer de façon fixe le dispositif de rétraction (102) de manière à ce qu'il s'étende le long d'une partie de paroi longitudinale du rail de guidage (6) ; et
activer, à la suite d'un signal d'activation, le dispositif de rétraction (102) pour éliminer quelconque jeu du raccord (101).
